# EUROPEAN PATENT APPLICATION

(11) **EP 2 315 092 A1**
(43) Date of publication of application: **27.04.2011**
(21) Application number: 09173217.2
(22) Date of filing: 16.10.2009
(51) Int. Cl.: G05B 19/409, G05B 23/02, G06F 3/048

(54) **Operator interface**

(71) Applicant: ABB Research Ltd., 8050 Zürich (CH)
(72) Inventor: Ganz, Christopher, 8046 Zürich (CH); Naedele, Martin, 8050 Zürich (CH)
(74) Representative: ABB Patent Attorneys

(57) **Abstract**

The present invention provides a method of displaying information relating to a state of an industrial plant, the method comprising receiving parameter data relating to operational parameters of an industrial plant, defining a parameter space relating to possible values of such operational parameters, and displaying the received parameter data in the parameter space. Also provided is a method of controlling an industrial process including the aforementioned method, and a method of supplying plant state information to a user. Also provided is a corresponding system for monitoring an industrial plant and system for controlling an industrial plant.

## Description

### Background to the invention

The present invention relates to a method of displaying information relating to a state of an industrial plant and a user interface for operating such a method.

A control system conventionally comprises a device or set of devices to manage, command, direct or regulate the behaviour of other devices or systems and is operated by a user by means of a user interface.

Conventional operator stations for process control systems include a user interface comprising a display on which is represented the physical plant and processes of the system (such as pipes, boilers, valves etc) together with measurement value displays, trend curves (showing historical data), and status indicators. Although there may be hundreds of variables which can be controlled by the use via the user interface, typically only a small subset of values are observed and regulated by the user when the control system is operating under normal accepted conditions. The remaining values may only be consulted or relied on by the operator in the event of a deviation from the normal accepted operating parameters. These conventional user centred design techniques provide a bridge between the operator and the control system environment.

An alternative to conventional user centred design is Ecological Interface Design (EID). EID focuses on the work domain or environment, rather than on the end user or on a specific task and seeks to represent the constraints and relationships of the work environment perceptually through the user interface in order to shape user behaviour. For example, an aircraft operator typically uses an artificial horizon representation on a display when landing an aircraft rather than relying on historical data of engine pressure, temperature etc and numerical representation of orientation data. In other words, physical placement of the aircraft is being presented as a task oriented rather than physical orientation operation by the user.

EID allows the operation of a user interface in an intuitive way by an operator. This is particularly useful when the system is a power plant, nuclear plant, petrochemical refinery etc. The operator can react to unanticipated events by proactively working with the interface representation to return the display (and therefore the system) to within normal acceptable parameters. In other words, the operator's capabilities are being used to instinctively react to a situation presented in a way that allows the operator to comprehend intuitively i.e. by using good visuals instead of written text commands and information that would first require interpretation by the brain of the operator before a series of possible reactions could be formulated and assessed then implemented.

However, the control of complex systems using EID is difficult due to the interrelation between all the different parameters of the system and there is therefore a need for a user interface that allows the control of a complex control system by an operator without the need for the operator to have a complete understanding of how the entire complex system works.

### Summary of the Invention

The present invention seeks to address the problems of the prior art.

Accordingly, a first aspect of the present invention provides a method of displaying information relating to a state of an industrial plant, the method comprising receiving parameter data relating to operational parameters of an industrial plant, defining a parameter space relating to possible values of such operational parameters, and displaying the received parameter data in the parameter space. Preferably, the parameter space comprises an interactive environment in which the receive parameter data is presented as graphic element within the interactive environment. For example, where the interactive environment is a car racing gaming environment, the plant state may be represented by the position of the car within a road. For example, one or more of the process boundaries may be represented as the road borders. For example, decision points requiring operator input may be represented as forks in the road. The industrial plant parameters being controlled by an operator via the operation of a vehicle within the interactive environment such that steering of the vehicle within the interactive environment influences the plant control parameters and the plant dynamics are shown as movement of the car within the road.

Alternatively, the plant may be mapped to an artificial environment such as a flight simulation, space invader environment or the like may instead of a car driving scenario as detailed above. It will be appreciated that any other suitable interactive environment may be used which relies on the hand-eye control loop of the operator to respond to the interactive environment in order to influence the plant control parameters and play dynamics.

In one embodiment, the parameter space may be an abstract logic space. Alternatively, the parameter space may be an abstract geometrical space, i.e. a spatial representation of parameters. For example, rather than the three dimensional coordinates comprising conventional x, y, z geometry coordinates of objects, the coordinates may relate to temperature, pressure and flow.

In a further embodiment, the parameter data relating to the current operational state of the plant is represented by its position within the parameter space.

The parameter data relating to the past operational state of the plant may be represented by a trace representation within the parameter space.

The parameter data relating to the future operational state of the plan may be represented by a path representation within the parameter space, i.e. the parameter data relating to the future operational state of the plant may be represented by a line connecting possible future operating points within the parameter space.

It should be noted that to directly interact with the plant may be dangerous and may not, in all cases, make optimal use of the intuition of the operator. Preferably, in order to make use of operator intuition in hand-eye control actions, the time constants of the process should be within a few seconds in order to coincide with the hand movement of the operator (e.g. the driver in a car driving plant control environment).

In one embodiment, the plant may be run in simulation mode by depicting the plant state and control parameters within a game-like environment (as previously described) and the operator movements monitored and/or recorded for subsequent analysis. The optimally control the dynamics of the game-like environment, the plant time constants may be shifted in the game-like environment model to allow for more interactive operation. It will be appreciated that the plant time constants may vary depending on the skill of the operator, the complexity of the plant and the nature of the game-like environment with which the operator is interacting.

By assigning a score to each simulated action, the simulation that achieved the highest score i.e. achieved the most desired or favourable outcome may be identified. The highest scoring control action may then be selectively run on the actual plant when required.

In one embodiment, the method further comprises displaying historical parameter data in the parameter space. For example, such historical parameter data may be represented or visualised as trace lines with the interactive environment.

The operator interaction at the user interface may be via any suitable means allowing the movement of the operator to be translated into an input to the control system gaming environment. Such means may include one or more of the group comprising joystick, wireless remote such as a Wiimote^{®}, airmouse, steering wheel or any other suitable haptic user interface. Thus, the operator may operate the control system gaming environment by using few manual controls to steer the parameter space position indicator through the parameter space. In one embodiment, this steering may be (but is not necessarily) along an indicated trajectory space.

A further aspect of the present invention provides a method of controlling an industrial process, the method comprising, displaying information relating to the method of a first aspect of the present invention, and controlling the industrial process in dependence upon such displayed information.

A further aspect of the present invention provides a method of supplying plant state information to a user, the method comprising, receiving parameter data regarding plant state information, defining a parameter space relating to possible values of parameter data, and supplying plant state information from the parameter data in relation to the parameter space.

### Brief Description of the Drawings

An embodiment of the invention will now be described, by way of example only, and with reference to the accompanying drawing, in which:

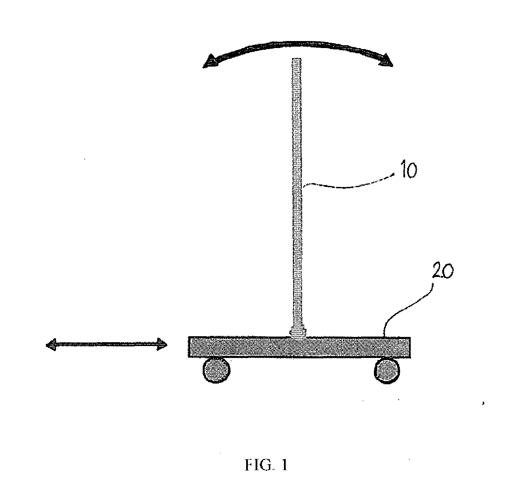

Figure 1 shows a diagrammatic representation of a pendulum model illustrating a display in accordance with the present invention.

### Detailed Description of the Invention

One embodiment illustrating the present invention is, for example, an instable process area, such as a processing area where a small degradation of the process performance may inherently result in a worsening of the situation. Any small initial movement of a process variable may not be initially readily apparent to an operator. For example, in an operator environment where process variables are displayed using numbers only, the rate of change may not be immediately visible, and sometime even the direction of change may be difficult to observe. In addition, if the initial small movement of a process variable goes unnoticed, when the change in process variable does become apparent to an operator and action taken, the action taken may be too late or the action taken insufficient/too strong, to accurately correct the situation.

In accordance with one embodiment of the present application, the situation could be represented as an upright pendulum 10, where the process variable is represented by the position of the pendulum 10 (the pathway of possible position change of pendulum 10 indicated by arrow A), and the control action acts on the position of the cart 20 (the pathway of movement of cart 20 indicated by arrow B). It is intuitively obvious to an operator that the position of the pendulum 10 will alter from the upright even if the position of the cart 20 changes only slightly. Thus, if the position of the pendulum 10 alters from the upright, it will be obvious to an operator that immediate action is required in order to stabilise the process in time before the pendulum 10 falls.

Although aspects of the invention have been described with reference to the embodiment shown in the accompanying drawings, it is to be understood that the invention is not limited to the precise embodiment shown and that various changes and modifications may be effected without further inventive skill and effort.

## Claims

1. A method of displaying information relating to a state of an industrial plant, the method comprising:
receiving parameter data relating to operational parameters of an industrial plant;
defining a parameter space relating to possible values of such operational parameters; and
displaying the received parameter data in the parameter space.

2. A method according to Claim 1, further comprising displaying historical parameter data in the parameter space.

3. A method according to Claim 1 or Claim 2, wherein the parameter space is an abstract geometrical space.

4. A method according to any preceding Claim, wherein the parameter data relating to the current operational state of the plant is represented by its position within the parameter space.

5. A method according to any preceding Claim, wherein the parameter data relating to the past operational state of the plant is represented by a trace representation within the parameter space.

6. A method according to any preceding Claim, wherein the parameter data relating to the future operational state of the plan is represented by a path representation within the parameter space.

7. A method of controlling an industrial process, the method comprising:
displaying information relating to a method as claimed in any preceding Claim; and
controlling the industrial process in dependence upon such displayed information.

8. A method of supplying plant state information to a user, the method comprising:
receiving parameter data regarding plant state information;
defining a parameter space relating to possible values of parameter data; and
supplying plant state information from the parameter data in relation to the parameter space.

9. A system for monitoring an industrial plant, the system comprising:
means for receiving parameter data relating to operational parameters of an industrial plant;
means for defining a parameter space relating to possible values of such operational parameters;
means for displaying received parameter data in a defined parameter space.

10. A system for controlling an industrial plant comprising:
means for receiving parameter data relating to operational parameters of an industrial plant;
means for defining a parameter space relating to possible values of such operational parameters;
means for displaying received parameter data in the parameter space;
means for receiving control inputs from a user;
means for outputting control information relating to the control inputs, to such an industrial plant.
